# EUROPEAN PATENT APPLICATION

(11) **EP 2 405 597 A1**
(43) Date of publication of application: **11.01.2012**
(21) Application number: 10748296.0
(22) Date of filing: 12.01.2010
(51) Int. Cl.: H04B 10/18, H04J 14/02, G02B 6/10

(54) **METHOD AND DEVICE FOR DISPERSION SLOPE COMPENSATION**

(30) Priority: 06.03.2009 CN 200910008750
(71) Applicant: Huawei Technologies Co., Ltd., Shenzhen, Guangdong 518129 (CN)
(72) Inventor: BAI, Fei, Shenzhen Guangdong 518129 (CN); LU, Yiquan, Shenzhen Guangdong 518129 (CN); SHI, Liyuan, Shenzhen Guangdong 518129 (CN); LIU, Hao, Shenzhen Guangdong 518129 (CN)
(74) Representative: Barth, Stephan Manuel
(86) International application number: PCT/CN2010/070127
(87) International publication number: WO 2010/099706

(57) **Abstract**

Embodiments of the present invention disclose a dispersion slope compensation method and apparatus, which relates to the field of communication. The method includes: performing dispersion slope compensation on a main optical channel; and dividing the main optical channel into a preset number of sub-bands, and performing the dispersion slope compensation on each sub-band. The apparatus includes: a main optical channel compensation module, a band-division module and a compensation module. The method and apparatus have the following beneficial effects. The dispersion slope compensation is performed on the main optical channel, and then band division is performed on the main optical channel after the compensation, and the dispersion slope compensation is performed on each sub-band. The configuration of the method is simple, the number of the sub-bands is few, and the cost is dramatically reduced as compared with the dispersion slope compensation method in the prior art.

## Description

This application claims priority to Chinese Patent Application No. 200910008750.2, filed with the Chinese Patent Office on March 6, 2009 and entitled "DISPERSION SLOPE COMPENSATION METHOD AND APPARATUS", the contents of which are all incorporated herein by reference in their entireties.

### FIELD OF THE INVENTION

The present invention relates to the field of fiber communication, and in particular to a dispersion slope compensation method and apparatus.

### BACKGROUND OF THE INVENTION

Fiber dispersion is a physical phenomenon that different frequency components of signals transmitted by a fiber and different group velocities of different mode components cause distortion of the transmitted signals. Dispersion may lead to optical pulse broadening and inter-symbol interference, so that a receiver generates a faulty judgment, and the dispersion needs to be compensated according to actual system conditions. Different systems have a certain dispersion tolerance, which may allow a certain amount of residual dispersion. The purpose of dispersion compensation is to compensate the residual dispersion into a dispersion tolerance range, ensuring transmission performance of a system.

In actual projects, the amount of dispersion requiring compensation depends on a system transmission distance and a dispersion coefficient of the fiber. Submarine cable projects vary greatly, and transmission distances and submarine fiber types are different, which lead to significantly different residual dispersion slopes. When the transmission distance is long, a short wavelength may have a residual dispersion of -6000 ps/nm, and a long wavelength may have a residual dispersion of 6000 ps/nm, with a dispersion slope of 300 ps/nm2. When the distance is short, the dispersion slope may be only 40 ps/nm2. As for the difference, a solution with a flexible configuration which may cover most application scenarios needs to be developed.

Currently, the method for dispersion slope compensation is a single-wave compensation method.

The single-wave compensation is to divide all the wavelengths into single wavelengths, and then configure a Dispersion Compensation Module (DCM) or Fiber Bragg Grating (FBG) for each wavelength. A band-division compensation (level-1 wavelength related centralized compensation) is to use a Data Switching Exchange (DSE) band-division compensation module to divide the residual dispersion, which are to be compensated, into N sub-bands, with each sub-band being configured with DCMs of different kilometers. In this way, the dispersion slope is evened up.

The inventor finds through analysis that the prior art has the following problems.

When the single-wave compensation is used, absolute values of amounts of dispersion at short and long wavelengths are large, and a larger number of DCMs are required than intermediate wavelengths, causing that a budget of the power of the channel is insufficient, and an optical amplifier may need to be configured for the single wave. As a result, the cost is increased. If the FBG module is used, an insertion loss is reduced and the optical amplifier is saved, but the cost of the FBG module is higher than that of the DCM.

### SUMMARY OF THE INVENTION

In order to achieve a simple and flexible system configuration and reduce the cost, embodiments of the present invention provide a dispersion slope compensation method and apparatus. Technical solutions are as follows:

An embodiment of the present invention provides a dispersion slope compensation method, where the method includes:
performing dispersion slope compensation on a main optical channel; and
dividing the main optical channel into a preset number of sub-bands, and performing the dispersion slope compensation on each sub-band.

An embodiment of the present invention provides a dispersion slope compensation method, where the method includes:
performing dispersion slope compensation on a main optical channel; and
resolving an optical signal into different wavelengths, and performing single-wave compensation on each wavelength corresponding to the residual dispersion.

An embodiment of the present invention provides a dispersion slope compensation apparatus, where the apparatus includes: a main optical channel compensation module, a band-division module and a compensation module, in which
the main optical channel compensation module is configured to perform dispersion slope compensation on a main optical channel;
the band-division module is configured to divide the main optical channel into a preset number of sub-bands, after the compensation performed by the main optical channel compensation module is completed; and
the compensation module is configured to perform the dispersion slope compensation on each sub-band after the division by the band-division module.

An embodiment of the present invention provides a dispersion slope compensation apparatus, where the apparatus includes: a main optical channel compensation module, a wavelength division multiplexer and a single-wave compensation module, in which
the main optical channel compensation module is configured to perform dispersion slope compensation on a main optical channel;
the wavelength division multiplexer is configured to resolve an optical signal after the compensation by the main optical channel compensation module into different wavelengths; and
the single-wave compensation module is configured to perform single-wave compensation on each wavelength corresponding to the residual dispersion after the resolution by the wavelength division multiplexer.

The technical solutions provided by embodiments of the present invention have the following beneficial effects. The dispersion slope compensation is performed on the main optical channel, and then band division is performed on the main optical channel after the compensation, and the dispersion slope compensation is performed on each sub-band. The configuration of the method is simple, the number of the sub-bands is small, and the cost is dramatically reduced as compared with the dispersion slope compensation method in the prior art.

### DETAILED DESCRIPTION OF THE DRAWINGS

FIG. 1 is a flow chart of a dispersion slope compensation method according to Embodiment 1 of the present invention;

FIG. 2 is a flow chart of a dispersion slope compensation method according to Embodiment 2 of the present invention;

FIG. 3 is a flow chart of a dispersion slope compensation method according to Embodiment 3 of the present invention;

FIG. 4 is a schematic structural diagram of a dispersion slope compensation apparatus according to Embodiment 4 of the present invention;

FIG. 5 is a schematic structural diagram of another dispersion slope compensation apparatus according to Embodiment 4 of the present invention;

FIG. 6 is a schematic structural diagram of the dispersion slope compensation apparatus with an optical amplifier according to Embodiment 4 of the present invention;

FIG. 7 is a schematic structural diagram of a dispersion slope compensation apparatus according to Embodiment 5 of the present invention;

FIG. 8 is a schematic structural diagram of another dispersion slope compensation apparatus according to Embodiment 5 of the present invention;

FIG. 9 is a schematic structural diagram of a dispersion slope compensation apparatus in a 50G-interval system according to Embodiment 5 of the present invention; and

FIG. 10 is a schematic structural diagram of a dispersion slope compensation apparatus according to Embodiment 6 of the present invention.

### DETAILED DESCRIPTION OF THE EMBODIMENTS

In order to make the objectives, technical solutions, and advantages of the present invention more comprehensible, the following describes the present invention in further detail with reference to embodiments of the present invention and the accompanying drawings.

### Embodiment 1

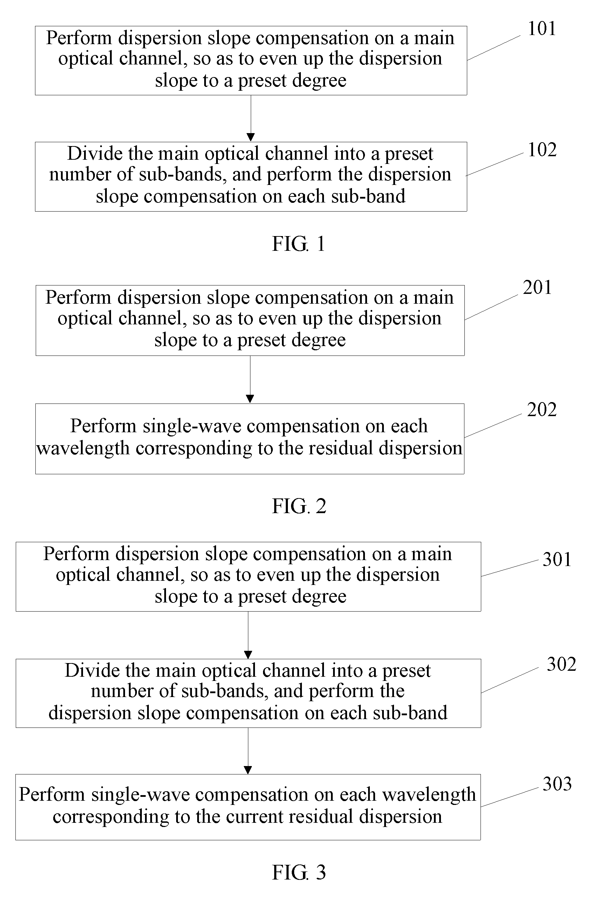

Referring to FIG. 1, an embodiment of the present invention provides a dispersion slope compensation method, where the method includes:

S101: Dispersion slope compensation is performed on a main optical channel, so as to even up the dispersion slope to a preset degree.

A Dispersion Slope Compensation Module (DSCE) may be used to perform the dispersion slope compensation on the main optical channel.

102: After the dispersion slope compensation is performed on the main optical channel, the main optical channel is divided into a preset number of sub-bands, and the dispersion slope compensation is performed on each sub-band.

Specifically, a DCM may be configured for each sub-band to perform the dispersion slope compensation.

The dividing the main optical channel into the preset number of sub-bands, and performing the dispersion slope compensation on each sub-band include:
judging whether residual dispersion has been compensated into a dispersion tolerance range, and: if the residual dispersion has been compensated into the dispersion tolerance range, the dispersion slope compensation ends; if the residual dispersion has not been compensated into the dispersion tolerance range, dividing the main optical channel into the preset number of sub-bands, and performing the dispersion slope compensation on each sub-band.

For example, after the dispersion slope compensation is performed on the main optical channel, if the residual dispersion slope is ±700, and the dispersion tolerance range is ±200, the main optical channel may be divided into four sub-bands and the dispersion slope of each sub-band is within ±200, and then the DCMs of different kilometers are configured on each sub-band to shift the dispersion slope of the four bands, so that the residual dispersion of each sub-band is shifted into the dispersion tolerance range.

The embodiment of the present invention has the following beneficial effects. The dispersion slope compensation is performed on the main optical channel, and then band division is performed on the main optical channel after the compensation, and the dispersion slope compensation is performed on each sub-band. The configuration of the method is simple, and in a system with large dispersion tolerance, it is merely required to cascade the DSCMs on the main optical channel, and band-division compensation is not required. In a system with small dispersion tolerance, after the dispersion slope compensation is performed on the main optical channel, generally dividing the main optical channel into four sub-band modules may meet the requirement of band-division. The number of the sub-bands is small, and the cost is dramatically reduced as compared with the dispersion slope compensation method in the prior art. Moreover, it is not required to customize different band-division modules according to projects, and the cost of customizing the band-division module is saved.

### Embodiment 2

Referring to FIG. 2, an embodiment of the present invention provides a dispersion slope compensation method, where the method includes:

201: Dispersion slope compensation is performed on a main optical channel to even up the dispersion slope to a preset degree.

A DSCE may be used to perform the dispersion slope compensation on a main optical channel.

202: After the dispersion slope compensation is performed on the main optical channel, an optical signal is resolved into different wavelengths, and single-wave compensation is performed on each wavelength corresponding to residual dispersion.

The resolving the optical signal into different wavelengths, and performing the single-wave compensation on each wavelength corresponding to the residual dispersion includes:
judging whether the current residual dispersion is compensated into a dispersion tolerance range, and: if the current residual dispersion is compensated into the dispersion tolerance range, the dispersion slope compensation ends; if the current residual dispersion is not compensated into the dispersion tolerance range, performing the single-wave compensation on each wavelength corresponding to the current residual dispersion.

For example, after the compensation for the main optical channel, if the amount of dispersion of several single waves deviates from a dispersion slope curve, it means that the dispersion of the several single waves fails to be adjusted into the dispersion tolerance range, and the single-wave compensation may be performed on each wavelength corresponding to the residual dispersion.

In case of a 50G-interval system, after the dispersion slope compensation is performed on the main optical channel, 50G-interval light is divided into odd-numbered and even-numbered light with 100G interval, and then the odd-numbered and even-numbered light are resolved respectively.

The embodiment of the present invention has the following beneficial effects. The dispersion slope compensation is performed on the main optical channel, and then the dispersion slope compensation is performed on each single wavelength corresponding to the residual dispersion. After the dispersion slope compensation is performed on the main optical channel, the number of the wavelengths corresponding to the residual dispersion is dramatically reduced, and each wavelength only needs to be configured with a small-kilometer DCM. In this way, the insertion loss is low; no optical amplifier needs to be configured for the single wave; and the cost is dramatically reduced as compared with the compensation solution for each single wave in the prior art.

### Embodiment 3

Referring to FIG. 3, an embodiment of the present invention provides a dispersion slope compensation method, where the method includes:

301: Dispersion slope compensation is performed on a main optical channel, so as to even up the dispersion slope to a preset degree.

A DSCE may be used to perform the dispersion slope compensation on the main optical channel.

S302: After the dispersion slope compensation is performed on the main optical channel, the main optical channel is divided into a preset number of sub-bands, and the dispersion slope compensation is performed on each sub-band.

S303: After the dispersion slope compensation is performed on the sub-bands, an optical signal is resolved into different wavelengths, and single-wave compensation is performed on each wavelength corresponding to current residual dispersion.

The dividing the main optical channel into the preset number of sub-bands, and performing the dispersion slope compensation on each sub-band includes:
judging whether residual dispersion is compensated into a dispersion tolerance range, and: if the residual dispersion is compensated into a dispersion tolerance range, the dispersion slope compensation ends; if the residual dispersion is not compensated into a dispersion tolerance range, dividing the main optical channel into the preset number of sub-bands, and performing the dispersion slope compensation on each sub-band.

The resolving the optical signal into different wavelengths, and performing the single-wave compensation on each wavelength corresponding to the current residual dispersion includes:
judging whether the current residual dispersion is compensated into the dispersion tolerance range, and: if the current residual dispersion is compensated into the dispersion tolerance range, the dispersion slope compensation ends; if the residual dispersion is not compensated into the dispersion tolerance range, performing the single-wave compensation is on each wavelength corresponding to the current residual dispersion.

For example, after the compensation for the main optical channel and the sub-bands, if amount of dispersion of several single waves deviates from a dispersion slope curve, it means that the dispersion of the several single waves fails to be adjusted into the dispersion tolerance range, and the single-wave compensation may be performed on each wavelength corresponding to the residual dispersion.

In case of a 50G-interval system, after the dispersion slope compensation is performed on the main optical channel, 50G-interval light is divided into odd-numbered and even-numbered light with 100G interval, and then the band-division compensation is performed on the odd-numbered and even-numbered light respectively.

The embodiment of the present invention has the following beneficial effects. The dispersion slope compensation is performed on the main optical channel first; then, band division is performed on the main optical channel after the compensation, and the dispersion slope compensation is performed on each sub-band; and afterward, the dispersion slope compensation is performed on the single wavelength corresponding to the residual dispersion after the band-division compensation. After the dispersion slope compensation is performed on the main optical channel, generally dividing the main optical channel into four sub-band module may meet the requirements of the band-division. The number of the sub-bands is small, it is not required to customize different band-division modules according to projects, and the cost of customizing the band-division module is saved as compared with the solution that merely uses the band-division compensation. After the dispersion slope compensation for the main optical channel and the band-division compensation, the number of the wavelengths corresponding to the residual dispersion is dramatically reduced, and each wavelength only needs to be configured with a small-kilometer DCM. In this way, the insertion loss is low, no optical amplifier needs to be configured for the single wave, and the cost is much lower than the compensation solution for each single wave in the prior art. If merely the main optical channel is compensated in the present invention, N DSCMs are cascaded, and the cost is the price of N DSCMs. Through the calculation of actual projects, the cost is dramatically reduced as compared with the dispersion slope compensation solution in the prior art.

### Embodiment 4

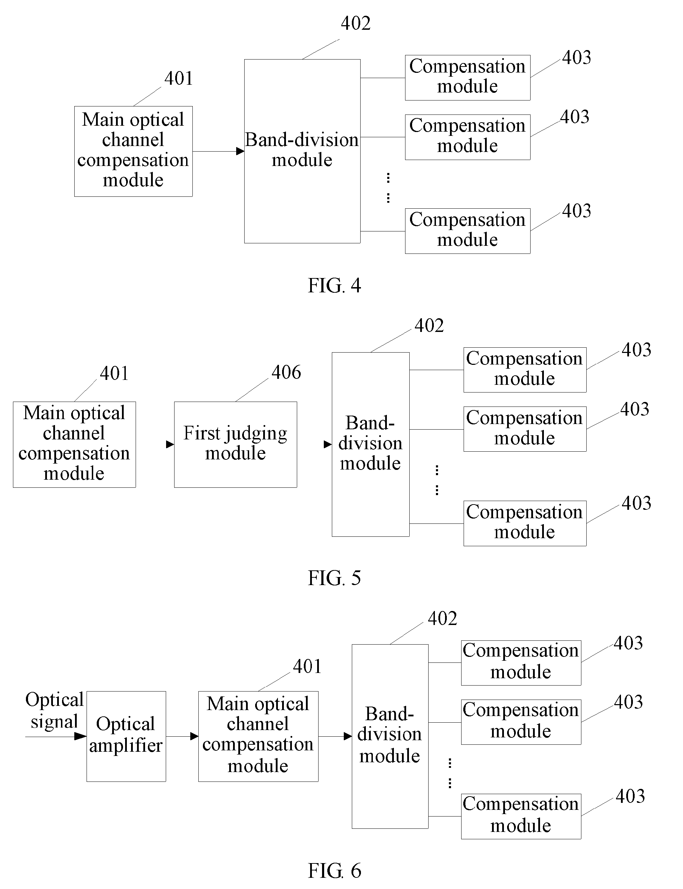

Referring to FIG. 4, an embodiment of the present invention provides a dispersion slope compensation apparatus, which includes: a main optical channel compensation module 401, a band-division module 402 and a compensation module 403.

The main optical channel compensation module 401 is configured to perform dispersion slope compensation on a main optical channel, so as to even up the dispersion slope to a preset degree.

A DSCE may be used to perform the dispersion slope compensation on the main optical channel.

The band-division module 402 is configured to divide the main optical channel into a preset number of sub-bands, after the compensation performed by the main optical channel compensation module 401 is completed.

Specifically, the band-division module 402 may be a DSE module.

The compensation module 403 is configured to perform the dispersion slope compensation on each sub-band after the division by the band-division module 402.

Specifically, the number of the compensation modules 403 matches the number of the sub-bands divided by the band-division module 402, that is, the number of the sub-bands of the main optical channel divided by the band-division module 402 is equal to the number of the compensation modules 403. The compensation module 403 may be a DCM module.

Referring to FIG. 5, the apparatus may further include: a first determining module 406.

Correspondingly, after the main optical channel compensation module 401 performs the dispersion slope compensation on the main optical channel, residual dispersion after the compensation is transmitted to the first determining module 406.

The first determining module 406 is configured to judge whether the residual dispersion is in a dispersion tolerance range after receiving the residual dispersion transmitted from the main optical channel compensation module 401, and: if the residual dispersion is in the dispersion tolerance range, the dispersion slope compensation ends; if the residual dispersion is not in the dispersion tolerance range, trigger the band-division module 402.

In actual applications, the apparatus may further include an optical amplifier. Referring to FIG. 6, after an optical signal is amplified by the optical amplifier, the main optical channel compensation module 401 performs the dispersion slope compensation on the main optical channel of the amplified optical signal, and the band-division module 402 divides the main optical channel into a preset number of sub-bands after the compensation. One compensation module 403 is configured for each sub-band, and the compensation module 403 performs dispersion slope compensation on each sub-band.

For example, after the dispersion slope compensation is performed on the main optical channel, if residual dispersion slope is ±700, and the dispersion tolerance range is ±200, the main optical channel may be divided into four sub-bands and the dispersion slope of each sub-band is within ±200, and then the DCMs of different kilometers are configured on each sub-band to shift the dispersion slope of the four sub-bands, so that the residual dispersion of each sub-band is shifted into the dispersion tolerance range.

The embodiment of the present invention has the following beneficial effects. The dispersion slope compensation is performed on the main optical channel first, and if the residual dispersion still exists after the compensation, band division is performed on the main optical channel, and the dispersion slope compensation is performed on each sub-band. The configuration of the method is simple, and in a system with large dispersion tolerance, it is merely required to cascade the DSCMs on the main optical channel, and band-division compensation is not required. In a system with small dispersion tolerance, after the dispersion slope compensation is performed on the main optical channel, generally dividing the main optical channel into four sub-band modules may meet the requirements of the band-division.. The number of the sub-bands is small, and the cost is highly reduced. Moreover, it is not required to customize different band-division modules according to projects, and the cost of customizing the band-division module is saved.

### Embodiment 5

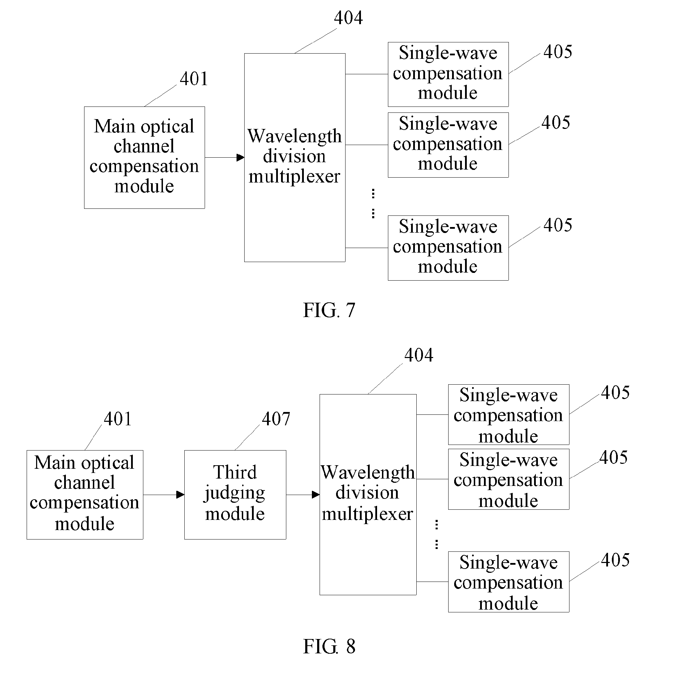

Referring to FIG. 7, an embodiment of the present invention provides a dispersion slope compensation apparatus, which includes: a main optical channel compensation module 401, a wavelength division multiplexer 404 and a single-wave compensation module 405.

The main optical channel compensation module 401 is configured to perform dispersion slope compensation on a main optical channel, to even up the dispersion slope to a preset degree.

A DSCE may be used to perform the dispersion slope compensation on the main optical channel.

The wavelength division multiplexer 404 is configured to split an optical signal after the compensation by the main optical channel compensation module 401, that is, resolve the optical signal into different wavelengths.

The single-wave compensation module 405 is configured to perform single-wave compensation on each wavelength corresponding to residual dispersion after the resolution by the wavelength division multiplexer 404.

Referring to FIG. 8, the apparatus may further include: a third determining module 407.

Correspondingly, after the main optical channel compensation module 401 performs the dispersion slope compensation on the main optical channel, the residual dispersion after the compensation is transmitted to the third determining module 407.

The third determining module 407 is configured to judge whether the residual dispersion is in a dispersion tolerance range after receiving the residual dispersion transmitted from the main optical channel compensation module 401, and: if the residual dispersion is in the dispersion tolerance range, the compensation ends; if the residual dispersion is not in the dispersion tolerance range, trigger the wavelength division multiplexer 404.

In actual applications, the apparatus may further include an optical amplifier. The optical amplifier transmits the optical signal to the main optical channel compensation module 401 after amplifying the optical signal, and the optical amplifier may also be located between the main optical channel compensation module 401 and the wavelength division multiplexer 404.

For example, after the compensation for the main optical channel, if the amount of dispersion of several single waves deviates from a dispersion slope curve, it means that the dispersion of the several single waves fails to be adjusted into the dispersion tolerance range, and the single-wave compensation may be performed on each wavelength corresponding to the residual dispersion.

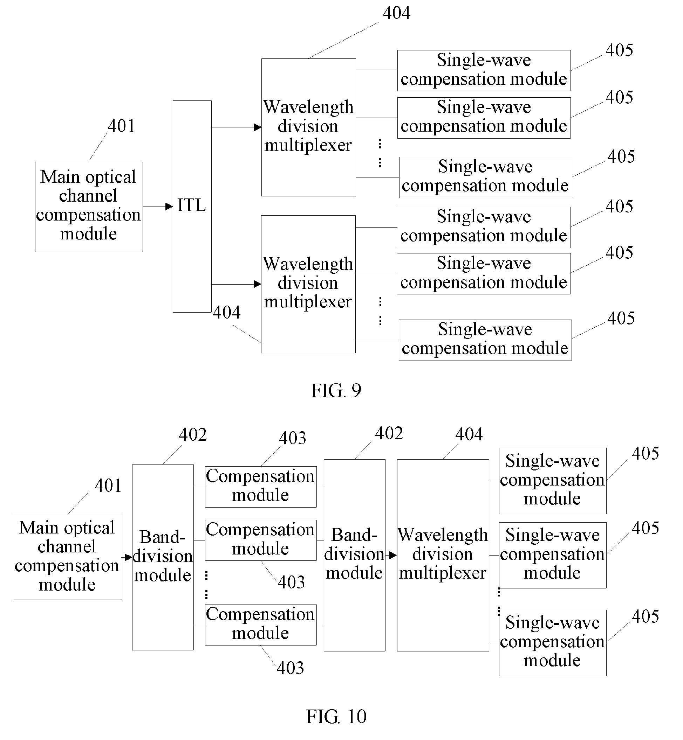

In case of wave division in a 50G-interval system, referring to FIG. 9, a 50G-interval light needs to pass through an interleaver (ITL) first, and the ITL is configured to divide the 50G-interval light into odd-numbered and even-numbered light with 100G interval.

The embodiment of the present invention has the following beneficial effects. The dispersion slope compensation is performed on the main optical channel first, and if the residual dispersion still exists after the compensation, the dispersion slope compensation is performed on the single wavelength corresponding to the residual dispersion. After the dispersion slope compensation for the main optical channel, the number of the wavelengths corresponding to the residual dispersion is dramatically reduced, and each wavelength only needs to be configured with a small-kilometer DCM. In this way, the insertion loss is low; no optical amplifier needs to be configured for the single wave; and the cost is dramatically reduced as compared with the compensation solution for each single wave in the prior art.

### Embodiment 6

Referring to FIG. 10, an embodiment of the present invention provides a dispersion slope compensation apparatus, which includes: a main optical channel compensation module 401, a band-division module 402, a compensation module 403, a wavelength division multiplexer 404 and a single-wave compensation module 405.

The main optical channel compensation module 401 is configured to perform dispersion slope compensation on a main optical channel, so as to even up the dispersion slope to a preset degree.

A DSCE may be used to perform the dispersion slope compensation on the main optical channel.

The band-division module 402 is configured to divide the main optical channel into a preset number of sub-bands, after the compensation performed by the main optical channel compensation module 401 is completed, and is further configured to combine optical signals after the compensation by the compensation modules 403 into one optical signal, and transmit the optical signal to the wavelength division multiplexer 404.

Specifically, the band-division module 402 may be a DSE module.

The compensation module 403 is configured to perform the dispersion slope compensation on each sub-band after the division by the band-division module 402.

The wavelength division multiplexer 404 is configured to split an optical signal after the compensation by the compensation module 403, that is, resolve the optical signal into different wavelengths.

The single-wave compensation module 405 is configured to perform single-wave compensation on each wavelength corresponding to the residual dispersion after the resolution by the wavelength division multiplexer 404.

For example, after the compensation for the main optical channel and the sub-bands, if the amount of dispersion of several single waves deviates from a dispersion slope curve, it means that the dispersion of the several single waves fails to be adjusted into a dispersion tolerance range, and the single-wave compensation may be performed on each wavelength corresponding to the residual dispersion.

The apparatus may further include: a first determining module 406.

Correspondingly, after the main optical channel compensation module 401 performs the dispersion slope compensation on the main optical channel, the residual dispersion after the compensation is transmitted to the first determining module 406.

The first determining module 406 is configured to judge whether the residual dispersion is in the dispersion tolerance range after receiving the residual dispersion transmitted from the main optical channel compensation module 401, and: if the residual dispersion is in the dispersion tolerance range, the dispersion slope compensation ends; if the residual dispersion is not in the dispersion tolerance range, trigger the band-division module 402.

The apparatus may further include: a second determining module 408.

Correspondingly, after the compensation module 403 performs the dispersion slope compensation on each sub-band after the division by the band-division module 402, current residual dispersion is transmitted to the second determining module 408.

The second determining module 408 is configured to judge whether the current residual dispersion is in the dispersion tolerance range after receiving the current residual dispersion transmitted from the compensation module 403, and: if the current residual dispersion is in the dispersion tolerance range, the dispersion slope compensation ends; if the current residual dispersion is not in the dispersion tolerance range, trigger the wavelength division multiplexer 404.

In actual applications, the apparatus may further include an optical amplifier. The optical amplifier transmits the optical signal to the main optical channel compensation module 401 after amplifying the optical signal, and the optical amplifier may also be located between the main optical channel compensation module 401 and the band-division module 402, or between the band-division module 402 and the wavelength division multiplexer 404.

In case of wave division in a 50G-interval system, a 50G-interval light needs to be divided into odd-numbered and even-numbered light with 100G interval by an ITL first, and the ITL may be located between the main optical channel compensation module 401 and the band-division module 402.

The embodiment of the present invention has the following beneficial effects. The dispersion slope compensation is performed on the main optical channel first; then, band division is performed on the main optical channel after the compensation, and the dispersion slope compensation is performed on each sub-band; and afterward, the dispersion slope compensation is performed on the single wavelength corresponding to the residual dispersion after the band-division compensation. After the dispersion slope compensation is performed on the main optical channel, generally dividing the main optical channel into four sub-band modules may meet the requirements of the band-division. The number of the sub-bands is small, it is not required to customize different band-division modules according to the projects, and the cost of customizing the band-division module is saved as compared with the solution that merely uses the band-division compensation. After the dispersion slope compensation for the main optical channel and the band-division compensation, the number of the wavelengths corresponding to the residual dispersion is dramatically reduced, and each wavelength only needs to be configured with a small-kilometer DCM. In this way, the insertion loss is low, no optical amplifier needs to be configured for the single wave, and the cost is much lower than the compensation solution for each single wave in the prior art. If merely the main optical channel is compensated in the present invention, N DSCMs are cascaded, and the cost is the price of N DSCMs. Through the calculation of actual projects, the cost is dramatically reduced as compared with the dispersion slope compensation solution in the prior art.

The embodiments of the present invention may be implemented through software and the corresponding software program may be stored in a readable storage medium such as a hard disk, a buffer, or an optical disk of a computer.

The above descriptions are merely some exemplary embodiments of the present invention, but are not intended to limit the present invention. Any modification, equivalent replacement, or improvement made without departing from the spirit and principle of the present invention should fall within the protection scope of the present invention.

## Claims

1. A dispersion slope compensation method, comprising:
performing dispersion slope compensation on a main optical channel; and
dividing the main optical channel into a preset number of sub-bands, and performing the dispersion slope compensation on each sub-band.

2. The method according to claim 1, wherein the dividing the main optical channel into a preset number of sub-bands, and performing the dispersion slope compensation on each sub-band comprises:
judging whether residual dispersion is compensated into a dispersion tolerance range, and: if the residual dispersion is compensated into the dispersion tolerance range, the dispersion slope compensation ends; if the residual dispersion is not compensated into the dispersion tolerance range, dividing the main optical channel into the preset number of sub-bands, and performing the dispersion slope compensation on each sub-band.

3. The method according to claim 1, wherein after the performing dispersion slope compensation on each sub-band, the method further comprises:
resolving an optical signal into different wavelengths, and performing single-wave compensation on each wavelength corresponding to the current residual dispersion.

4. The method according to claim 3, wherein the resolving an optical signal into different wavelengths, and performing single-wave compensation on each wavelength corresponding to the current residual dispersion comprises:
judging whether the current residual dispersion is compensated into a dispersion tolerance range, and: if the current residual dispersion is compensated into the dispersion tolerance range, the dispersion slope compensation ends; if the current residual dispersion is not compensated into the dispersion tolerance range, performing the single-wave compensation on each wavelength corresponding to the current residual dispersion.

5. A dispersion slope compensation method, comprising:
performing dispersion slope compensation on a main optical channel; and
resolving an optical signal into different wavelengths, and performing single-wave compensation on each wavelength corresponding to residual dispersion.

6. The method according to claim 5, wherein the resolving an optical signal into different wavelengths, and performing single-wave compensation on each wavelength corresponding to residual dispersion comprises:
judging whether the residual dispersion is compensated into a dispersion tolerance range, and: if the residual dispersion is compensated into the dispersion tolerance range, the dispersion slope compensation ends; if the residual dispersion is not compensated into the dispersion tolerance range, performing the single-wave compensation on each wavelength corresponding to the residual dispersion.

7. A dispersion slope compensation apparatus, comprising: a main optical channel compensation module, a band-division module and a compensation module, wherein
the main optical channel compensation module is configured to perform dispersion slope compensation on a main optical channel;
the band-division module is configured to divide the main optical channel after the compensation by the main optical channel compensation module into a preset number of sub-bands; and
the compensation module is configured to perform the dispersion slope compensation on each sub-band after the division by the band-division module.

8. The apparatus according to claim 7, further comprising: a first determining module, wherein correspondingly, after the main optical channel compensation module performs the dispersion slope compensation on the main optical channel, residual dispersion after the compensation is transmitted to the first determining module; and
the first determining module is configured to judge whether the residual dispersion is in a dispersion tolerance range after receiving the residual dispersion transmitted from the main optical channel compensation module, and: if the residual dispersion is in the dispersion tolerance range, the dispersion slope compensation ends; if the residual dispersion is not in the dispersion tolerance range, trigger the band-division module.

9. The apparatus according to claim 7 or 8, further comprising: a wavelength division multiplexer and a single-wave compensation module, wherein
correspondingly, the band-division module is further configured to combine optical signals after the compensation by the compensation module into one optical signal, and transmit the optical signal to the wavelength division multiplexer;
the wavelength division multiplexer is configured to resolve the received optical signal into different wavelengths; and
the single-wave compensation module is configured to perform single-wave compensation on each wavelength corresponding to the residual dispersion after the resolution by the wavelength division multiplexer.

10. The apparatus according to claim 9, further comprising: a second determining module, wherein
correspondingly, after the compensation module performs the dispersion slope compensation on each sub-band after the division by the band-division module, current residual dispersion is transmitted to the second determining module; and
the second determining module is configured to judge whether the current residual dispersion is in the dispersion tolerance range after receiving the current residual dispersion transmitted from the compensation module, and: if the current residual dispersion is in the dispersion tolerance range, the dispersion slope compensation ends; if the residual dispersion is not in the dispersion tolerance range, trigger the wavelength division multiplexer.

11. A dispersion slope compensation apparatus, comprising: a main optical channel compensation module, a wavelength division multiplexer and a single-wave compensation module, wherein
the main optical channel compensation module is configured to perform dispersion slope compensation on a main optical channel;
the wavelength division multiplexer is configured to resolve an optical signal after the compensation by the main optical channel compensation module into different wavelengths; and
the single-wave compensation module is configured to perform single-wave compensation on each wavelength corresponding to residual dispersion after the resolution by the wavelength division multiplexer.

12. The apparatus according to claim 11, further comprising: a third determining module, wherein
correspondingly, after the main optical channel compensation module performs the dispersion slope compensation on the main optical channel, the residual dispersion after the compensation is transmitted to the third determining module; and
the third determining module is configured to judge whether the residual dispersion is in a dispersion tolerance range after receiving the residual dispersion transmitted from the main optical channel compensation module, and: if the residual dispersion is in the dispersion tolerance range, the compensation ends; if the residual dispersion is not in the dispersion tolerance range, trigger the wavelength division multiplexer.
